# EUROPEAN PATENT APPLICATION

(11) **EP 1 785 866 A1**
(43) Date of publication of application: **16.05.2007**
(21) Application number: 05300906.4
(22) Date of filing: 08.11.2005
(51) Int. Cl.: G06F 11/07

(54) **Alarm consolidaton in IT infrastructures**

(71) Applicant: Hewlett-Packard Development Company, L.P., Houston, TX 77070 (US)
(72) Inventor: Collomb, Jean-Michel, 06901, Sophia-Antipolis (FR); Flauw, Marc, c/o HP France, 92130, Issy les Moulineaux - Paris (FR)
(74) Representative: Lloyd, Richard Graham

(57) **Abstract**

A method is provided of consolidating alarm notifications in a fault management system of an IT infrastructure, wherein creation of alarm objects is indicated by initial notifications, and correlations or reductions performed on alarm objects by a reduction-correlation mechanism are indicated by follow-on notifications. Individually for the alarm objects, a parameter-dependent delay period is determined, and if follow-on notifications appear during the delay period, the initial and follow-on notifications are consolidated, and after expiration of the delay period, a consolidated notification is sent to a user. If no follow-on notifications appear during the delay period, initial notifications are sent to the user, after expiration of the delay period.

## Description

### FIELD OF THE INVENTION

The present invention relates generally to fault management in information technological (IT) networks, and for example, to methods, computer systems and computer program products for consolidating alarm notifications collected by a fault management system.

### BACKGROUND OF THE INVENTION

The management of IT infrastructures is typically divided into the sectors of fault management, configuration management, accounting management, performance management and security management which may be memorized by the acronym "FCAPS".

The present application pertains to the realm of fault management which deals with the detection, isolation, and elimination of abnormal system behavior. A fault is usually defined as a deviation from the prescribed operating goals, system functions, or services. Messages concerning faults are usually conveyed to a network operator or a network management system by the network components of the IT infrastructure themselves or by users of an IT infrastructure. Some of the sources of faults are data transmission paths (e.g. transceiver cable, twisted pair cable or optical fiber cable), network components (e.g. transceivers, repeaters, bridges, star couplers, server computers or data terminals), end systems, software for components, inadequate interface descriptions, or even incorrect operation.

The function of fault management is to detect and correct faults quickly to ensure that a high level of availability of a distributed system and the services it provides is maintained. The tasks that have evolved from this objective include monitoring the IT infrastructure state, and reacting to faults. Furthermore, it is a typical situation in IT infrastructures that the occurrence of one fault entails a series of consecutive faults. Therefore, another important feature which is often implemented in fault management systems allows for filtering alarms that have been emitted due to the same fault in order to prevent the network operator being inundated with alarms that all belong to one fault. Hence, it is reasonable to establish the root alarm and send only one (or at least a reduced number of) notification(s) to the user which informs him/her about the root alarm, i.e. the event that caused the consecutive alarms. Identifying the root cause of a series of alarms is typically performed by means of alarm reduction/correlation which is an instrument for filtering alarm notifications generated in response to a root alarm.

### SUMMARY OF THE INVENTION

A method is provided of consolidating alarm notifications in a fault management system of an IT infrastructure. Creation of alarm objects is indicated by initial notifications, and correlations or reductions performed on the alarm objects by a reduction-correlation mechanism are indicated by follow-on notifications. The method includes: individually for the alarm objects, a parameter-dependent delay period is obtained, and if follow-on notifications appear during the delay period, the initial and follow-on notifications are consolidated, and after expiration of the delay period, a consolidated notification is sent to a user. If no follow-on notifications appear during the delay period, the initial notification is sent to the user, after expiration of the delay period.

According to another aspect, a computer system is provided for consolidating alarm notifications in a fault management system of an IT infrastructure. Creation of alarm objects is indicated by initial notifications, and correlations or reductions performed on the alarm objects by a reduction-correlation mechanism are indicated by follow-on notifications. The method includes: individually for the alarm objects, a parameter-dependent delay period is obtained, and if follow-on notifications appear during the delay period, the initial and follow-on notifications are consolidated, and after expiration of the delay period, a consolidated notification is sent to a user. If no follow-on notifications appear during the delay period, the initial notification is sent to the user, after expiration of the delay period.

According to another aspect, a computer program product is provided which is either in the form of a machine-readable medium with program code stored on it, or in the form of a propagated signal comprising a representation of program code. The program code is arranged to carry out a method, when executed on a computer system, of consolidating alarm notifications in a fault management system of an IT infrastructure. Creation of alarm objects is indicated by initial notifications, and correlations or reductions performed on alarm objects by a reduction-correlation mechanism are indicated by follow-on notifications. The method includes: individually for the alarm objects, a parameter-dependent delay period is obtained, and if follow-on notifications appear during the delay period, the initial and follow-on notifications are consolidated, and after expiration of the delay period, a consolidated notification is sent to a user. If no follow-on notifications appear during the delay period, the initial notification is sent to the user, after expiration of the delay period.

Other features are inherent in the methods, systems and products disclosed or will become apparent to those skilled in the art from the following detailed description of embodiments and its accompanying drawings.

### BRIEF DESCRIPTION OF THE DRAWINGS

Embodiments of the invention will now be described, by way of example, and with reference to the accompanying drawings, in which:
Fig. 1 is a high-level architecture of an exemplary network management system, according to embodiments of the invention, and a managed IT infrastructure;
Fig. 2 illustrates an exemplary design of an alarm management system, according to embodiments of the invention, which is part of the network management system;
Figs. 3a and b display the functioning of a threshold filter, as an example of an alarm reduction-correlation system, and the corresponding functioning of a notification consolidation system, according to embodiments of the invention;
Fig. 4 displays the functioning of a heap filter, as an example of an alarm reduction-correlation system, and the corresponding functioning of a notification consolidation system, according to embodiments of the invention;
Figs. 5a to d show the functioning of a toggling filter and the corresponding functioning of a notification consolidation system, according to embodiments of the invention;
Fig. 6 shows the notification consolidation system, according to embodiments of the invention;
Fig. 7 displays a flowchart indicating the course of process of the notification consolidation system, according to embodiments of the invention;
Fig. 8 is a diagrammatic representation of an embodiment of the alarm management system including the notification consolidation system.

The drawings and the description of the drawings are of embodiments of the invention and not of the invention itself.

### DESCRIPTION OF THE PREFFERRED EMBODIMENTS

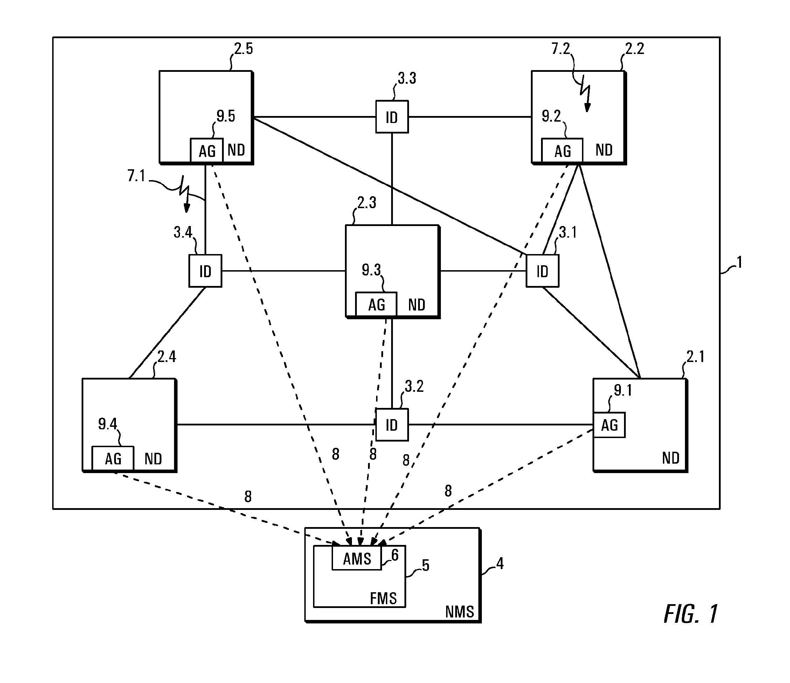

Fig. 1 shows a high-level architecture of an exemplary network management system used for monitoring an IT infrastructure. However, before proceeding further with the description of Fig. 1, a few items of the embodiments will be discussed.

In some of the embodiments, alarm notifications are consolidated in a fault management system of an IT infrastructure. Alarm objects, which are caused by events in the network, are indicated by initial notifications, whereas correlations or reductions performed on the alarm objects are indicated by follow-on notifications. For each individual alarm object, a parameter-dependent delay period is obtained. If a relatively long delay period is obtained, then there is a higher probability that the alarm objects can be correlated and reduced, so that the initial and follow-on notifications are consolidated and one consolidated notification is sent to a user. This mode of operation corresponds to what is referred to as event pre-processing mode, which puts the emphasis on providing a user with thoroughly consolidated notifications, and, in exchange, accepting a longer time period until an operator is informed about an event. This mode of operation is therefore unfavorable for alarm objects with a high severity that require rapid forwarding to the user, but is rather used for alarm objects that are of minor urgency and which should be consolidated in order to prevent an operator from being inundated by a large number of notifications. If a shorter delay period is assigned to the alarm object, then it is more likely that the alarm object cannot be consolidated since, during a short delay period, only few correlations or reductions can be performed. Therefore, if no follow-on notifications appear during the delay period the initial notifications are sent to the operator after expiration of the delay period. Follow-on notifications that appear after the delay period are sent to the user after expiration of the delay period, directly when the corresponding alarm reductions or correlations are performed.

It should be mentioned that the term "IT infrastructure" as used herein refers to both computer networks and telecommunication networks.

The term "event" as used herein is a condition or occurrence in a managed IT infrastructure that is recognized as requiring notification to a user for further analysis, possibly leading to corrective action. It is therefore synonymously used with the term "fault". Events are recorded as alarm objects in the network devices of the IT infrastructure and are sent to an alarm management system. Therefore, alarm objects are entities derived from events generated by network devices, which can be handled and manipulated by reduction and/or correlation mechanisms.

The term "correlation" as used herein refers to adding information to an alarm object indicating that it is in relation to some other objects. The term "reduction" refers to the deletion of alarm objects since they have become obsolete in that they refer to alarms that do not exist anymore.

According to embodiments of the invention, the content of an alarm object is not directly transmitted to the user. Rather, alarm objects are internal representations of events occurring in the IT infrastructure which are sent to an alarm management system. In contrast, the term "notification", as used herein, refers to an indication that is destined to be shown to the user. An alarm notification is a piece of information which contains data pertaining to one alarm object, which is the main information contained in the alarm object. Different types of notifications are sent when an alarm object is created, modified or deleted. It should be mentioned that notifications are consolidated in a notification consolidation system, so that not all notifications are forwarded to the user, whereas alarm objects are reduced and/or correlated in an alarm reduction-correlation system. Consolidating notifications also means that if an alarm object is deleted after its creation, the notification indicating the creation is followed by a notification indicating the deletion so that no notification is forwarded to the user.

A discriminator construct is an OSI-compliant data structure that filters the received alarm objects, allowing only those that satisfy some specified criteria to be passed through. In an alarm handling context, filters allow for the specification of criteria that alarm objects have to meet in order to have a filtering function performed. Filter patterns are used to determine whether or not an alarm object is allowed to be submitted to a filter. The filter pattern is expressed in terms of presence or value of certain attributes of the alarm object, and is satisfied if it evaluates to "true".

A managed object is any network resource, in particular a network device, that is managed by the network management system.

In an IT infrastructure, there is typically a large quantity of network resources, modeled as managed objects, which generate alarm objects in response to an event. Consequently, each alarm object is therefore generated based on at least one event in at least one network resource of an IT infrastructure. Hardware or software entities on the network devices of the IT infrastructure perform the role of an agent. Agents recognize relevant events (e.g. alarms) in the network device as quickly as possible, generate alarm objects and convey these alarm objects to an alarm management system to allow for an efficient network management. Between different network resources, there are various kinds of relations so that an event in a network resource (network components, applications) may result in a series of further failures in the same or another network resource. Alarm objects are collected in the network management system through periodic polling or through asynchronous operations, such as traps. The causes that lead to alarm objects include exceeded thresholds, time expirations, state and configuration changes, test results, certain errors, and user reactions. Typically, alarm objects are assigned different priorities, in this context also referred to as "severities" which indicate the seriousness of the event is it relates to. The dependencies between individual alarm objects should be visible in the interests of an effective fault management, i.e. a so-called main alarm object, which is basically or completely independent of other alarm objects, may be the source for a sequence of further individual alarms - so-called derived alarms, which are related to the main alarm object. In order to achieve efficient network monitoring, the corresponding alarms objects are correlated, so that they reflect the occurring dependencies between alarm objects.

In large IT infrastructures, network operators or management systems are often faced with a large number of alarm objects arriving simultaneously. A single event can lead to many "secondary" events being triggered as a consequence; however, these events may be of limited importance to the operator and may only relate to a small number of problems. In an IT infrastructure at which the alarm rate may be hundreds of alarm objects per second, the operator may be overwhelmed by incoming alarm objects within a short period of time. Alarm object filtering and correlation are hence used to reduce the rate at which alarm objects arrive at a client interface to a level where the operator can cope with problems as they arise. This is done by means of "intelligent" alarm object filters (e.g. threshold, heap and toggle), which will be explained in more detail below and which filter incoming alarm objects at source to avoid a flood of alarm objects reaching the operator. One may use this functionality, for instance, to filter out numerous "secondary" alarm objects that refer to events that are not the root cause of a series of events. The type of filtering carried out depends on the definition of an associated discriminator construct and the type of filter used. Without alarm- object correlation, an operator has to navigate through and analyze immense volumes of network outage, traffic, and configuration data from multiple network devices and software systems. By means of alarm- object reduction and -correlation, an operator is enabled to quickly recognize the root cause of a sequence of alarm objects and may initiate concrete countermeasures for fault-repair. An event notification generally contains the attributes of event type, event cause, severity, and additional information such as managed object identifier, network address, event description, and time stamp. The sub-functions of alarm management typically refer to collecting data, accepting external events, generating internal events. Alarms are stored in various logfiles, in some cases sorted by origin, type, priority, and time. Filter mechanisms are provided for the search of events by a user or for the further processing of incoming alarm objects. Furthermore, a filter-controlled notification of events to the user is provided. Alarm correlation is supported in order to reduce possible "alarm storms" (which are symptomatic notifications of follow-on events caused by one root cause event) to the most important events. This is important to ensure that management actions respond only to actual "root" causes.

Normally, alarm object filtering is carried out at two levels, a low level and a high level. Low-level filtering is the functionality that filters alarm objects at source using the discriminator construct. Low-level filtering may be used to prevent alarm objects reaching the operator that are generated as a result of another, perhaps more serious problem. These "secondary" alarm objects are also of importance, but are normally not the root cause of the problem. By filtering out the less important alarm objects an operator can concentrate on solving the real problem as quickly as possible, without the root cause being hidden by a flood of alarm objects arriving at the user interface.

High-level filtering presents the operator with a particular view of the network activity; it collects alarm objects and passes only those that match this view. By using this functionality, one can choose to view the network on the basis of, for example, geography, equipment, severity or any other criteria.

In some of the embodiments, there are filter types that block the incoming alarm objects to prevent meaningless events causing congestion. This is known as the filtering capacity of an alarm object filter.

In other embodiments, there are filter types that generate correlation information from incoming alarm objects. This information is generated on the basis of time or on the basis of a given argument. The output is a single alarm object correlated to several alarm objects. This is known as the correlation capacity of an alarm object filter. The output event contains "value-added" information useful to the operator.

In some of the embodiments, an individual threshold filter, heap filter or toggling filter is used, whereas in other embodiments a cascaded combination of the filters is used. After one filter has processed the alarm objects, they are forwarded to the next filter.

In some of the embodiments, a threshold filter collects alarm objects and queues them during a given timeframe. This type of filter operates on the basis of "alarm object rate". If a given alarm object-count threshold is crossed within the timeframe, the problem is considered to have breached a tolerance value and an alarm object is forwarded. If the threshold is not crossed within the timeframe, the problem is not considered to be significant and nothing is forwarded, so that the problem is completely hidden from the operator. This type of filter has filtering capacity.

In other embodiments, a heap filter collects alarm objects and queues them during a given timeframe. This type of filter operates on the basis of time only. When the timeframe expires, an alarm object is forwarded. A heap filter provides useful statistical information about how many alarm objects of a given type have been received within the given timeframe and enables the operator to monitor the frequency of alarm objects and to decide what action should be taken. This type of filter has correlation capacity only.

In still other embodiments, a toggling filter operates on the principle of suppressing toggling alarm objects. Toggling alarm objects are an alternation of alarm objects with severity=clear (meaning that the event pertaining to the alarm object is short-term or self-resolving) followed by an alarm object with non-clear severity. As soon as an alarm object is available in the alarm management system (AMS) it will be involved in a check whether this alarm object is part of a toggling alarm object sequence. The check occurs in such a way that every alarm object with severity=clear is stored for a configurable period in the alarm management system. If during this period a new alarm object is raised with non-clear severity, the raised alarm object and the previous alarm object with severity=clear are discarded. Otherwise, after the period, the raised alarm object is processed normally in the alarm management system.

An alarm object filter comprises: an identifier, a discriminator construct and the associated attributes. An identifier is the name of the filter, which provides a unique identification for this filter instance. A discriminator construct contains a description of the alarm objects that will pass the discriminator construct and be tested against the alarm object filter(s). The following characteristic attributes of an alarm object can be defined in the input discriminator construct: managed object, event type, event time, severity, notification identifier, source identifier, probable cause, backed-up status, trend indication, security alarm cause, additional text and domain.

The settable attributes of an alarm object filter allow for determining the behavior of a filter, according to the filter type.

A filter that exhibits correlation capacity forwards an event with: the perceived severity set to the highest value received, the timestamp set to the current forwarding time, the additional text field formatted with "value-added" information. This information is correlated with the other events received within the same timeframe and includes: the number of alarm objects received (including the number for each severity level), the timestamp of the first alarm object received, the timestamp of the last alarm object received.

In the handling of alarm object storms, two approaches are conventionally used:
In what is referred to as "alarm object pre-processing", alarm objects which come from network devices are processed sequentially by the Alarm Management System. Only at the end of the processing of an alarm object, if an alarm object is created, deleted or modified, is the end-user notified. In this approach, it may take a period of time until the alarm object is correlated and reduced. This means that a network administrator is notified only after a period of time and therefore it takes some while until the failure which caused the alarm may be solved. If the failure is of high importance this means that a network component is down for a while and may entail severe problems.

Therefore, in some cases, it is desirable that alarm objects are not reduced and correlated but the alarm objects are directly reported to the network operator. In these cases, what is referred to as "alarm object post-processing" is applied. In this mode of operation, notifications pertaining to alarm objects are directly forwarded to the network operator without any preceding correlation or reduction mechanism. This approach has the advantage that the network operator is immediately informed about an event and can undertake countermeasures. However, since no correlation or reduction is performed, the network administrator is flooded with an abundance of notifications.

Hence, in some of the embodiments of the invention, alarm notifications are consolidated in a fault management system of an IT infrastructure. Alarm objects, which are caused by events in the network, are indicated by initial notifications. Correlations or reductions of alarm objects are indicated by follow-on notifications. For each individual alarm object, a parameter-dependent delay period is obtained. If a relatively long delay period has been obtained, then there is sufficient time to consolidate the initial and follow-on notifications and one consolidated notification is sent to a user. This mode of operation corresponds to the alarm object pre-processing mode. If a shorter delay period is assigned to the alarm object, the initial notifications and follow-on notifications which are finished after the expiration of the delay period are sent to the user.

In some of the embodiments, the delay period of an alarm object depends on the severity of the alarm objects, the load of the fault management system or a configuration parameter. The load of the fault management system is measured, for example, by means of the length of the alarm object waiting queue.

It should be mentioned that in some of the embodiments, "obtaining a parameter-dependent delay period" refers to determining a delay period for each alarm object, whereas in other embodiments, a delay period is calculated, e.g. for a time interval with a certain load of the fault management system, and all alarm objects generated within this delay period are assigned the same delay period. In the latter case, a delay period is selected out of one or more delay periods and is assigned to an alarm object. Furthermore, the term "follow-on" notification as used herein are all notifications that are not initial notifications. (Incidentally, the term does not indicate whether this notification is forwarded to a network operator or not.)

In some of the embodiments, the delay period is reduced for high severity alarm objects since then a network operator has to be informed about a severe malfunction quickly and is increased for low severity objects since the alarm objects relate to less important incidents and therefore sufficient time is provided to correlate and reduce the alarm objects so that a network operator is only confronted with one or few notifications.

In some of the embodiments, the delay period is increased in case of a high load on the fault management system. In this case, also referred to as alarm object storm, many notifications all refer to the same root event. A network operator does not want to be informed about all consecutive events and therefore a long delay period is provided which allows for proper correlation and reduction of the alarm objects so that the network operator is shielded from a large number of less important notifications.

Moreover, in some of the embodiments, the configuration parameter mentioned above depends on operational contexts and a correlation/reduction mechanism. The configuration parameter defines for each alarm severity the maximum value for the delay period for a normal event flow and for an event burst. A delay period is calculated by selecting a value between the two configurations for the delay for a normal event flow and for an event burst in dependence of the load on the fault management system which is represented by the size of the alarm object waiting queue.

Some of the embodiments of the computer program product with program code for performing the described methods include any machine-readable medium that is capable of storing or encoding the program code. The term "machine-readable medium" shall accordingly be taken to include, for example, solid state memories and, removable and non-removable, optical and magnetic storage media. In other embodiments, the computer program product is in the form of a propagated signal comprising a representation of the program code, which is increasingly becoming the usual way to distribute software. The signal is, for example, carried on an electromagnetic wave, e.g. transmitted over a copper cable or through the air, or a light wave transmitted through an optical fiber. The program code may be machine code or another code which can be converted into machine code, such as source code in a multi-purpose programming language, e.g. C, C++, Java, C#, etc. The embodiments of a computer system may be commercially available general-purpose computers programmed with the program code.

Returning now to Fig. 1 which shows an exemplary IT infrastructure 1 which is monitored by a network management system 4. The IT infrastructure 1 includes five network devices 2.1-2.5, such as personal computers or mainframe computers and four interconnect devices 3.1-3.4, such as routers, switches, and hubs. The network management system 4 features a fault management system 5 which, in turn, includes an alarm management system 6. As depicted, two network failures 7.1-7.2, indicated as flashes, occur during the operation of the IT infrastructure 1. One network failure 7.2 concerns the network device 2.2, and the other network failure 7.1 affects a network connection between the network device 2.5 and the interconnect device 3.4. Alarm objects pertaining to the two network failures 7.1, 7.2 are transferred to the alarm management system 6 by polling the network devices 2 and the interconnect devices 3. (It should be mentioned that the failure 7.1 pertaining to the connection between network device 2.5 and interconnect device 3.4 is not directly detectable since a cable is unable to transmit a notification that it is broken. However, by means of a physical layer fault detection software, it can be established that the cable is broken). Agents 9 on the network devices 2 transmit alarm objects when they detect that an event requiring notification occurs on the network devices. The transmission of alarm objects from the network devices 2 to the alarm management system 6 is indicated by dashed lines 8. It is the task of the alarm management system 6 to collect the alarm objects and process them. The problem arises that the indicated network failures 7 entail other problems which are reported to the alarm management system 6. Since the network devices 2 and interconnect devices 3 are all connected to each other, the failure 7.1 of the network connection between network device 2.5 and interconnect device 3.4 entails that also alarm objects pertaining to the interconnect device 3.4 are transmitted to the alarm management system 6, although the interconnect device 3.4 is working properly. These alarm objects collected by the alarm management system 6 therefore lead to an alarm object storm of hundreds of alarms which can hardly be surveyed by a network operator.

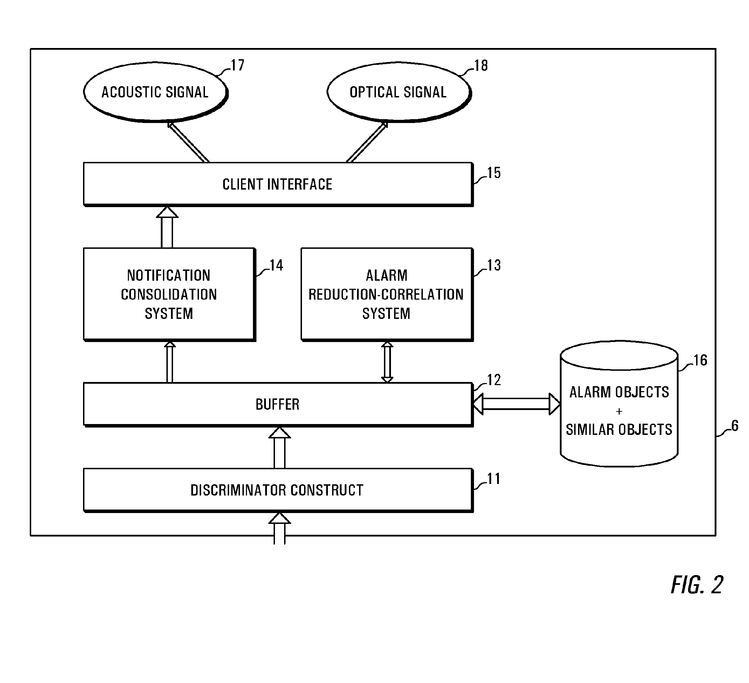

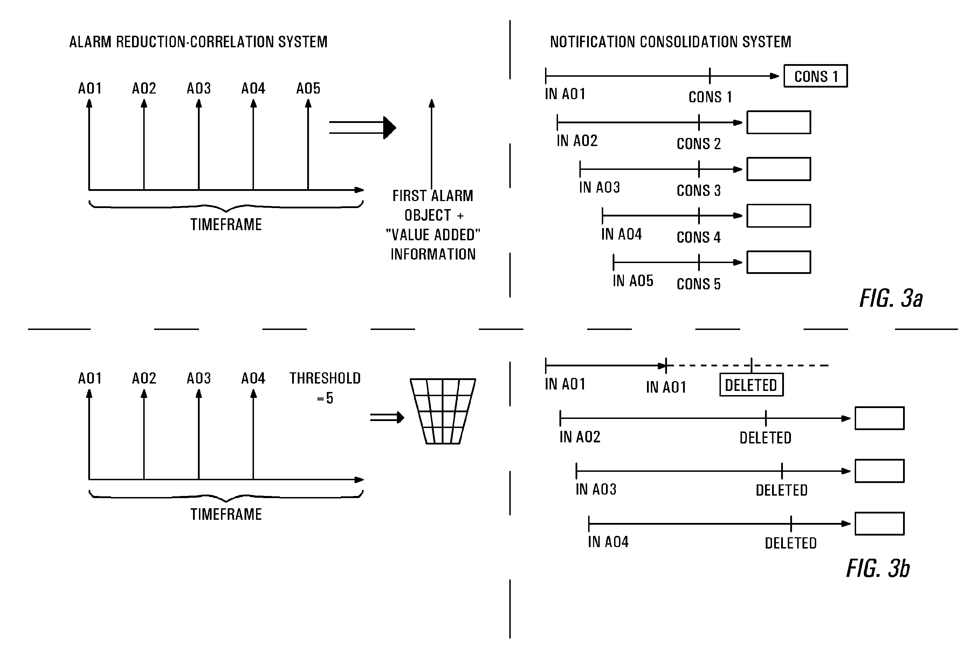

Fig. 2 illustrates the alarm management system 6 in more detail. The alarm objects enter the alarm management system 6 and pass a discriminator construct 11 which filters out alarm objects that are not to be processed by the alarm reduction-correlation system 13. Then, the alarm objects are collected in a buffer 12 and an initial notification for each alarm object is immediately generated in the notification consolidation system 14. The alarm objects are stored in an alarm object database 16 which is also capable of recognizing similar alarm objects to a given alarm object. The initial notifications are neither directly forwarded to the user nor to any external application, but an alarm reduction-correlation system 13 is used to further process the alarm objects. The alarm reduction-correlation system 13 is implemented by means of filters which will be explained in more detail in Figs. 3-5. The alarm reduction-correlation system 13 works in parallel to the notification consolidation system 14. Whenever the alarm reduction-correlation system 13 performs a reduction or correlation on the alarm objects, a notification is generated in the notification consolidation system 14. It should be mentioned that the modularized design of the notification consolidation system, operating on notifications, and the alarm reduction-correlation system, operating on alarm objects, allows for implementing the alarm reduction-correlation system 13 independently of the notification consolidation system 14, which means that the alarm reduction-correlation system 13 may be implemented, e.g. as one of a variety of filters, leaving the notification consolidation system unaffected. Moreover, the alarm reduction-correlation system 13 may be changed without necessitating any alteration of the notification consolidation system 14.

The initial notifications are kept during a parameter-dependent delay period in the notification consolidation system 14. If, during this delay period, the alarm reduction-correlation system 13 results in new reductions or correlations on the same alarm object, all the notifications are consolidated and the resulting one is sent to a client interface 11 after expiration of the delay period. Otherwise, if no reduction or correlation has been performed on the alarm object or the reduction-correlation processing has not been finished within the delay period, the initial notifications are sent to the client interface 11 and notifications resulting from the reduction-correlation (if any) are propagated to the client interface 11 after they are finished. The network operator is informed about alarm notifications by means of acoustic 17 and optical signals 18.

Figs. 3a and b show the functioning of a threshold filter as an example of the alarm reduction-correlation system of Fig. 2.

On the left-hand side of Fig. 3a, a threshold filter is depicted, whereas on the right-hand side of Fig. 3a the functioning of the notification consolidation system 14 is displayed. The threshold filter operates within a given timeframe for a specific alarm object type defined by the discriminator construct 11. A timer is started when an alarm object "not similar to a previous one" is received. The filter collects alarm objects that are similar and queues them, as long as the timeframe has not expired and the threshold has not been crossed. For a threshold filter, alarm objects are considered to be similar if they have the same managed object, alarm object type, probable cause and optionally specific problems or if they have the same managed object only.

The threshold filter collects alarm objects and queues them during a given timeframe. The threshold filter correlates alarm objects when the predefined threshold is crossed during a given timeframe. The output correlated alarm object contains "value-added" information useful to the operator. When the threshold is crossed or the timeframe expires, the threshold packet is ended and the timer is restarted each time an alarm object that was not in the previous packet is received. For example, if twelve similar alarm objects are received simultaneously, the filter will forward the first alarm object received with the counter=5. The timer is aborted when the fifth alarm object is received and restarted when the sixth alarm object arrives. When the tenth alarm object arrives, the process is repeated. Alarm objects eleven and twelve are queued until the threshold is crossed again or the timeframe expires. This type of filter operates on the basis of "alarm object rate". If a given alarm object-count threshold is crossed within the timeframe, the problem is considered to have breached a tolerance value and the collected alarm objects are correlated into a further alarm object, which may be processed by another filter in the case of a cascaded combination of filters. If the threshold is not crossed within the timeframe, the problem is not considered to be significant and the alarm objects are discarded, as shown in Fig. 3b.

In Fig. 3a, five alarm objects are collected during the timeframe. Since the threshold of five alarm objects is breached, the five alarm objects are correlated and the first alarm object (AO1) together with some value-added information is obtained as a result. Correspondingly, in the notification consolidation system 14, for each alarm object an initial notification (abbreviated as IN A01, IN A02, etc.) is generated and a delay period is determined. The length of the delay period corresponds to the lengths of the arrows shown. It should be mentioned that the delay period is not the same period as the timeframe in the alarm reduction-correlation system 13, but is parameter-dependent. In the example, the delay period is the shorter, the higher the severity of the alarm object is, which means that if an alarm object appears with a high severity (an alarm object relating to an event that requires immediate trouble-shooting), then the notification is quickly forwarded to the operator without waiting for consolidation. This consolidation behavior is similar to alarm object pre-processing. In the notification consolidation system 14, after the delay period has expired, a consolidation is performed on the notifications that appeared during the delay period. "cons1", which is generated after expiration of the timeframe, is a notification indicating that alarm object 1 has been involved in a reduction-correlation process, but is still existent since it has been determined as a root cause of a set of alarm objects (A01 - AO 7). Alarm object 1 has been amended in that some value-added information has been added. After the delay period pertaining to alarm object 1 has expired, one consolidated notification, indicating the initial notification of the creation of alarm object 1 and the value-added information generated by the alarm reduction-correlation system 13 is forwarded to the user. It should be mentioned that in the following figures framed notifications are the ones which are forwarded to the user.

For alarm object 2, an initial notification is created after generation of the alarm object, but alarm object 2 is deleted since it is correlated with alarm object 1 before the delay period expires. After expiration of the timeframe, a notification "cons2" is generated which indicates alarm object 2 has been deleted in the context of the alarm reduction-correlation. This means that, after the delay period has expired, no notification is forwarded to the user, which is indicated by an empty notification. It should be mentioned that an empty notification, meaning that nothing is forwarded to the user, is also considered as a consolidated notification. Therefore, the problem relating to alarm object 2 is completely hidden from the operator. The same occurs concerning the notifications regarding the alarm objects 3, 4, and 5.

In the example of Fig. 3b, a threshold of five alarm objects is assumed. Since only four alarm objects arrive within the timeframe, all alarm objects are discarded. Correspondingly, in the notification consolidation system 14, an initial notification is generated for each alarm object. The delay period for alarm object 1, since it has a high severity, is shorter than the timeframe, so that the alarm objects are not yet correlated (in this case discarded), when the delay period expires. Therefore, since at the point of time of the expiration of the timeframe, no correlation or reduction has been performed on the alarm object, the initial notification pertaining to the creation of an alarm object (IN AO1) is forwarded to the user after expiration of the delay period. Then, immediately after the timeframe has expired, which leads to a deletion of alarm object 1, a follow-on notification is sent to the user indicating that the alarm object 1 has still been reduced and does not exist anymore. Hence, some time after the expiration of the delay period, a notification is sent to the user indicating that alarm object 1 has been deleted and does not exist anymore. This consolidation behavior of notifications is similar to alarm object post-processing.

The delay period of alarm objects 2, 3, and 4 is longer than the timeframe. Therefore, the deletion of the alarm objects is still within the delay period, so that no notification is sent to the user pertaining to the creation of the alarm objects 2, 3, and 4. Since the notifications are consolidated before they are forwarded to the user, this consolidation behavior is referred to as alarm object pre-processing.

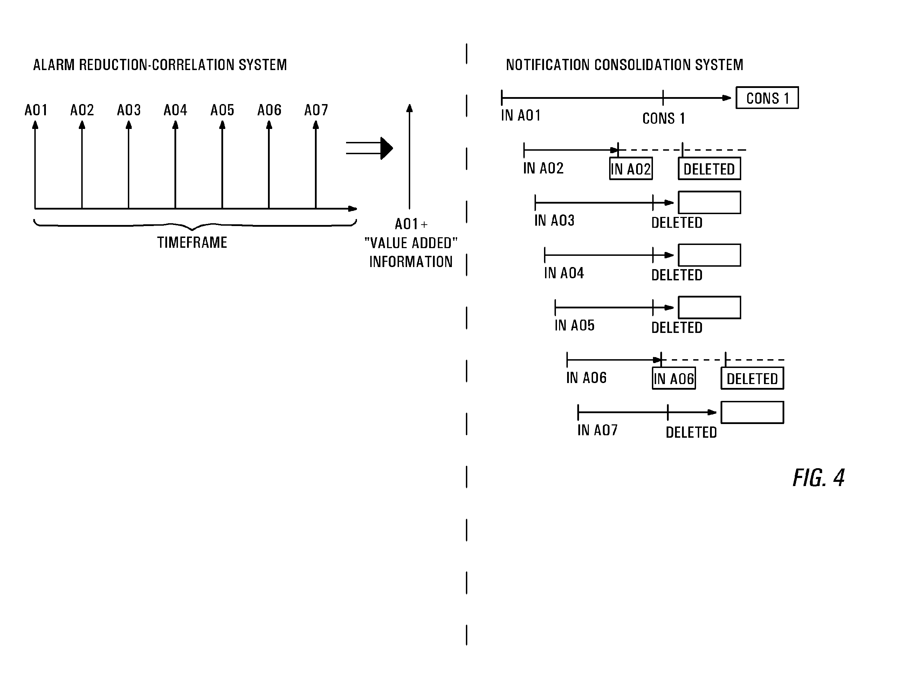

Fig. 4 shows the functioning of a heap filter as an exemplary embodiment of the alarm reduction-correlation system 9 of Fig. 2. The main difference between a threshold filter and a heap filter is that a threshold filter generates an alarm object when the threshold is crossed, whereas the heap filter provides information only and leaves the operator to decide when the problem is serious enough to require action. A heap filter operates within a given timeframe for the specific alarm object type defined by the discriminator construct. A timer is started when an alarm object "not similar to a previous one" is received. The filter collects alarm objects that are similar and queues them, as long as the timeframe has not expired. For a heap filter, alarm objects are considered to be similar if they have the same managed object, event type, probable cause and optionally specific problems or if they have the same managed object only. The heap filter forwards a "value-added" alarm object when the timeframe expires. This provides useful statistical information about how many alarm objects of a given type have been received and enables the operator to determine the accumulation period accurately. Instead of receiving many alarm objects, the operator only receives a summary of the alarm object information, but still has a record of how many alarm objects have been received. When the timeframe expires, the timer is restarted when the first new alarm object arrives.

The processing of alarm objects is explained by the example given in Fig. 4. Seven similar alarm objects have been collected within the timeframe; however, no alarm objects are output or forwarded to further filters (not depicted) until the timeframe expires, at which point the first alarm object received is sent with information about: the severity of the alarm object having the most recent alarm object time within the timeframe, the timestamp of the alarm object set to the current forwarding time, and some "value-added" information. This information is correlated with the other alarm objects within the same timeframe and includes the number of similar alarm objects received (including the number of each severity level), the timestamp of the first alarm object received, the timestamp of the last alarm object received.

In parallel, as shown on the right side of Fig. 4, the notification consolidation system 14 creates for each alarm object an initial notification. For each alarm object, a delay period is determined which indicates how long notifications are collected until a consolidated notification is forwarded to the user. The lengths of the delay periods are indicated by means of the lengths of the arrows. After the timeframe has expired, an alarm object is correlated, so that only the first alarm object A01 persists, whereas the other alarm objects are discarded. This means for the notification consolidation system 14, that directly after expiration of the timeframe, a consolidation notification is generated, which indicates that all alarm objects, except alarm object 1, have been deleted. The notification that alarm object 1 has been correlated with other alarm objects and is still existent, is sent to the user after expiration of the delay period pertaining to alarm object 1. The delay period of alarm object 2 expires before the timeframe, which means that the initial notification indicating that alarm object 2 has been created is sent to the user. Directly after expiration of the timeframe, a notification is forwarded to the user indicating that alarm object 2 has been deleted. Concerning the alarm objects 3, 4, 5 and 7, an initial notification is created. However, since the alarm objects could be correlated with the alarm object 1, before expiration of their delay period, an empty notification (i.e. no notification) is forwarded to the user. The delay period of alarm object 6 is shorter than the timeframe, so that the initial notification indicating the creation of alarm object 6 is forwarded to the user. Since alarm object 6 is correlated with alarm object 1, a notification indicating that the alarm object 6 has been deleted due to a correlation operation is forwarded to the user, immediately after the timeframe has expired.

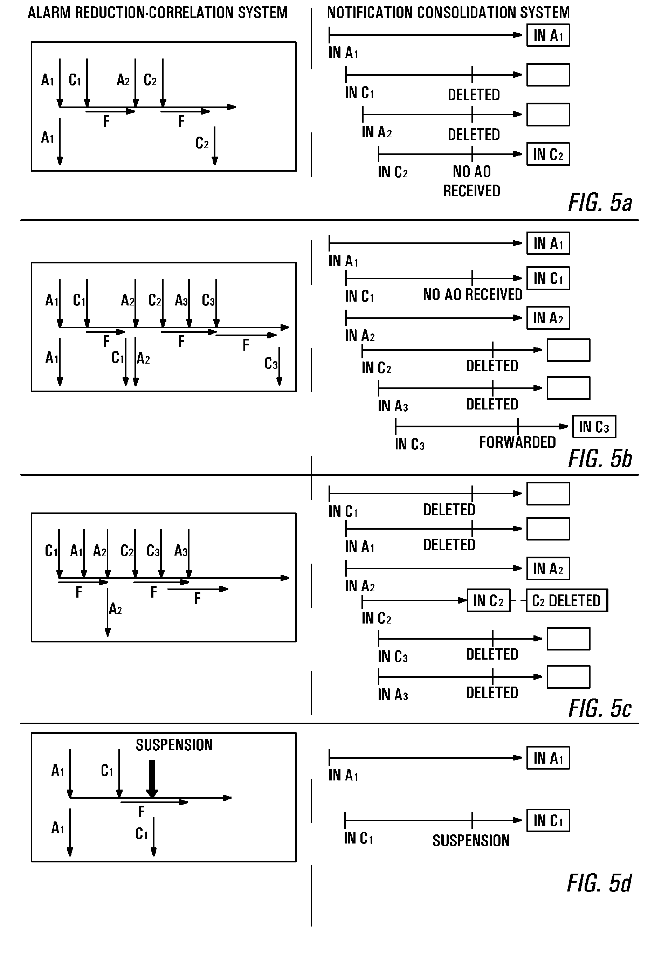

Figs. 5 show a toggling filter as an exemplary embodiment of the alarm reduction-correlation system 13 of Fig. 2. A toggling filter provides a way of filtering out unwanted alarm objects that could otherwise cause serious congestion in the alarm management system 1. When an IT infrastructure is subjected to a toggling problem, the result can be an alternation of a constant stream of alarm objects with severity=clear and alarm objects with non-clear severity over a long period of time. However, the operator may only want to know when the network device reverts to a stable state. In this case, a toggling filter is used to reduce the number of alarm objects arriving at the client interface 11. Therefore, a toggling filter is used to suppress alarm objects pertaining to toggling events. Toggling events are an alternation of events with perceived severity = clear and events with non-clear severity. The toggling filter allows the creation of a toggling filter context.

As soon as an alarm object is available in the alarm management system, it will be involved in a check to verify whether this alarm object is part of a toggling alarm object sequence. The check happens in such a way that every alarm object with severity = clear is stored for a configurable period To in the alarm management system. If during this period a new alarm object is raised with non-clear severity, the raised alarm object and the previous clear alarm object are discarded. Otherwise after the period To the raised alarm object is processed normally in AMS.

In all following examples, alarm objects are attached to the same probable cause of the same managed object.

In Fig. 5a, alarm object A1 is sent and is further processed since no filtering exists. The clearance alarm object C1 activates a filtering context. Alarm object A2 falls within this filtering context, so that it is discarded as well as C1. The filtering context is deleted once A2 is received. C2 activates a filtering context but is sent as no alarm object is received during this period; C2 is sent after T0 seconds.

Correspondingly, in the notification consolidation system 14, an initial notification is generated for alarm object 1. After the delay period for alarm object 1 has expired, the initial notification (IN A1) is sent to the user. For the alarm object C1, an initial notification is generated. Since the alarm object is deleted, a deletion notification is created. Then, after expiration of the delay period, an empty notification is forwarded to the operator. Alarm object 2 falls within the filtering context, and is deleted, so that no notification is forwarded to the user. The creation of alarm object C2 entails an initial notification. Since a filtering context is triggered by the creation of alarm object C2 and no further alarm object is created within this filtering context, a notification is created indicating that no alarm object has been received. After expiration of the delay period, the initial notification is sent to the user.

In Fig. 5b, alarm object A1 is sent, as no filtering context exists. Alarm object C1 activates a filtering context F. Since no alarm objects appear within the filtering context, C1 is further processed after expiration of the filtering context. Alarm object A2 is directly sent since no filtering context exists. Alarm object C2 activates a filtering context, and alarm object A3 falls within this filtering context, so that it is discarded as well as C2. Once A3 is received, the filtering context is deleted (it is not waited for timer expiration). C3 activates a filtering context. As no alarm object is received during this period, C3 is sent after T0 seconds.

In the notification consolidation system 14, an initial notification is created indicating the creation of the alarm object A1. Since there is no filtering context, the alarm object A1 is further processed. The initial notification is forwarded to the user after expiration of the delay period since no further alarm objects occur during the delay period. For alarm object C1, an initial notification is created. Since during the filtering context of C1, no alarm objects occur, a notification is created indicating that no alarm objects have been received. At the end of the delay period, the initial notification pertaining to C1 is forwarded to the user. The initial notification pertaining to alarm object A2 is forwarded to the user after expiration of the delay period. For alarm object C2, an initial notification is generated. A deletion notification is generated since alarm object C2 activates a filtering context and is finally discarded (together with alarm object A3). Therefore, the initial notification of alarm object A3 is not forwarded to the operator. For alarm object C3, an initial notification is generated. C3 activates a filtering context. Since no alarm object appears within the filtering context, the initial notification is forwarded after expiration of the delay period.

In Fig. 5c, C1 activates a filtering context. A1 falls within this filtering context, so that alarm objects C1 and A1 are therefore discarded. Once A1 is received, the filtering context is deleted. A2 is sent, as no filtering context exists. C2 activates a filtering context. C3 falls within this filtering context. Therefore, the filtering context is kept and the To period is rescheduled and restarts on reception of C3. C2 is discarded at this moment. A4 falls within this rescheduled filtering context. It is discarded as well as C3.

In the notification consolidation system 14, no notification is forwarded for alarm object C1 since it is deleted before the delay period of alarm object C1 expires. The same occurs with the alarm object A1, which is not reported to the operator either. For alarm object A2, an initial notification is created. Since alarm object A2 is directly further processed, nothing is reported in the notification consolidation system 14, so that the initial notification pertaining to alarm object A2 is forwarded to the user after expiration of the delay period. An initial notification is created for alarm object C2. Since C2 is only deleted at the end of the filtering context, i.e. after the expiration of the delay period. The initial notification pertaining to C2 is forwarded after the delay period, and immediately after expiration of the filtering context of C2 (with the result that alarm object C2 is deleted), a notification is generated indicating that alarm object C2 has been deleted. Again, this is an example for event post-processing, meaning that it is more important to rapidly inform the operator about the alarm than to provide the operator with a thoroughly consolidated notification which requires more time. Concerning the alarm objects C3 and A3, it could have been determined before expiration of the delay period that they can be deleted so that no notification is forwarded to the operator.

In Fig. 5d, A1 is sent, as no filtering context exists. C1 activates a filtering context. Then, the toggling filter is suspended. C1 is sent immediately after the filter is suspended.

In the notification consolidation system 14, an initial notification is created for alarm object A1. Since alarm object A1 is directly further processed, the initial notification in A1 is forwarded to the operator after expiration of the delay period. An initial notification is created for C1. Since the filter is suspended during the delay period of alarm object C1, a notification is created which reports this suspension. Then, after the delay period has expired, the initial notification C1 is forwarded to the user.

In Figs. 3 to 5 a threshold filter, a heap filter and a toggling filter have been shown as exemplary reduction-correlation mechanisms. However, it is pointed out that these are only examples of reduction-correlation mechanisms. Other examples of reduction-correlation mechanisms are expert systems (such as TeMIP expert) or pattern recognition systems.

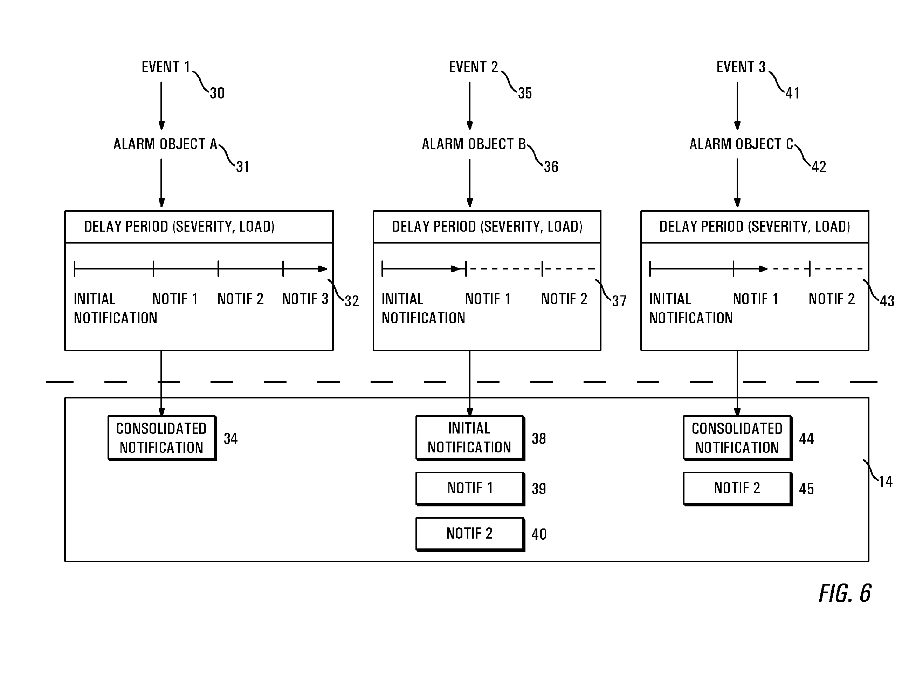

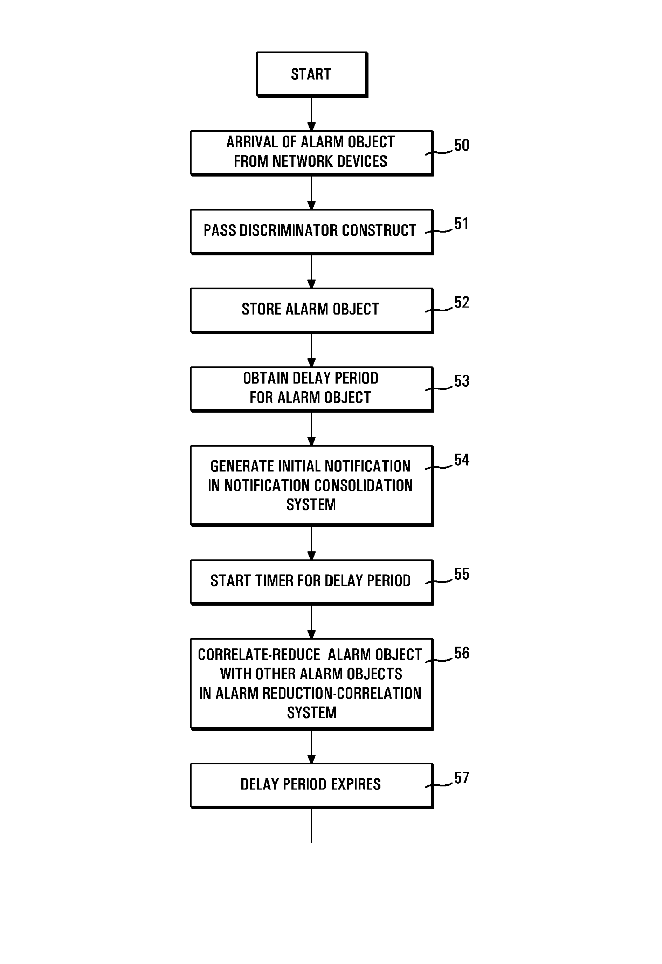

Fig. 6 illustrates another exemplary embodiment of the notification consolidation system 14 of Fig. 2 without a specific alarm reduction-correlation system 13 to demonstrate again the principle mechanism of the consolidation notification system 14. Moreover, as mentioned above, the notification consolidation system 14 can be operated with a variety of correlation and reduction mechanisms.

Three alarm objects A, B, and C (caused by three events 1, 2 and 3) are considered which are processed in an alarm reduction-correlation system (not depicted). For each alarm object A, B and C, a variable delay period, indicated as horizontal arrows of continuous lines, is determined. This delay period depends on the severity of each of the alarm objects and the load of the alarm management system 6. If alarm object A arrives at the alarm management system 6 and is passed by the discriminator construct 11, an initial notification is created. Then, the alarm object A is processed in the alarm reduction-correlation module 9. The notifications are kept in the notification consolidation system 14 during the determined period of time. During this time, the alarm objects pertaining to these notifications are modified or deleted in the alarm reduction-correlation module 9. These modifications and deletions are recorded in the notification consolidation system 14, and after the delay period of the alarm object A has expired, a notification containing all necessary information in a consolidated way is sent to the user. This way of processing notifications is referred to as "alarm object pre-processing".

The delay period of alarm object B is shorter than that of alarm object A. In this case, notifications pertaining to correlations occur too late (indicated by the dotted time interval). Therefore, after the delay period has expired, the initial notification is sent to the user and after a correlation has occurred, two further notifications are transmitted to the client interface 11. Concerning alarm object C, an initial notification is issued, and during the delay period, a further notification appears. Therefore, after the delay period has expired a consolidated notification is sent to the client interface 11. This way of processing notifications is referred to as "alarm object post-processing". In this case, the operator is inundated with a lot of notifications.

During the delay period determined for alarm object C, a notification pertaining to reduction-correlation mechanism appears. The initial notification and the first follow-on notification are consolidated, and after the delay period has expired, a consolidated notification is sent to the client interface 11. A further follow-on notification relates to a correlation which is finished after the delay period and therefore the notification is sent to the client interface 11 without any further consolidations.

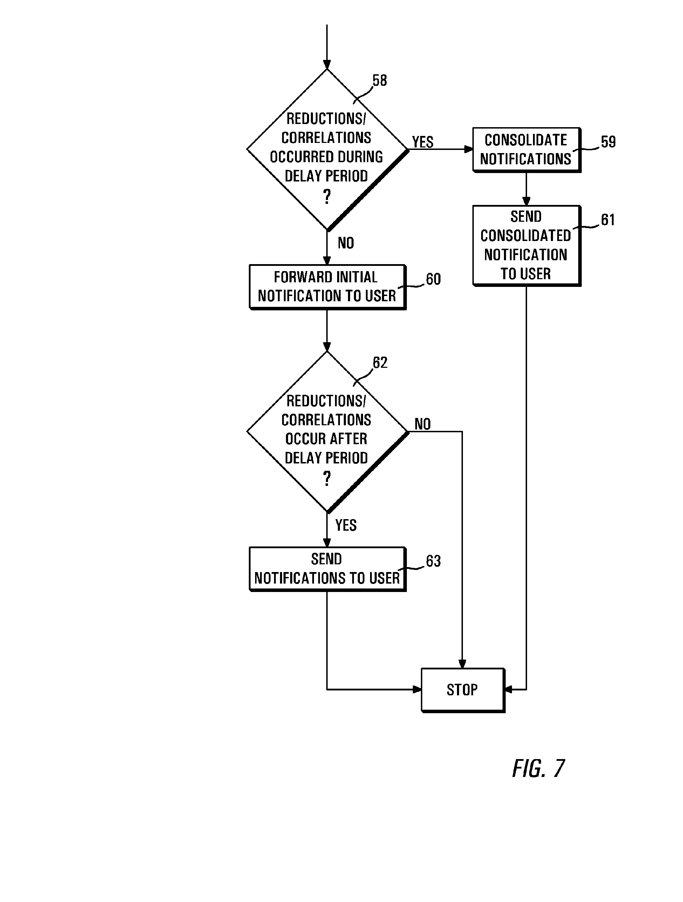

Fig. 7 shows a flowchart indicating the course of process of the method described above. At 50, an alarm object arrives from network devices 2 at the alarm management system 6. It passes a discriminator construct 11 at 51 and is stored in the buffer 8 at 52. At 53, a delay period is determined for each alarm object depending on the load of alarm objects in the alarm management system 6, the severity of the alarm object and the configuration. At 54, an initial notification is generated in the notification consolidation system 14 and at 55 a timer for the delay period for the alarm object is started. At 56, the alarm object is reduced or correlated with other alarm objects in the alarm reduction correlation system 13 by means of filters. At 57, the delay period of the alarm object expires. If reductions or correlations occurred during the delay period, then the notifications reporting about the reductions or correlations are consolidated accordingly, and a consolidated notification is sent to the user. At 60, if no reductions or correlations occurred during the delay period, the initial notification is forwarded to the user. If, after the delay period reductions or correlations pertaining to the alarm object occur, then, at 63, these notifications are immediately sent to the user as soon as a notification concerning the reduction or correlation occurs.

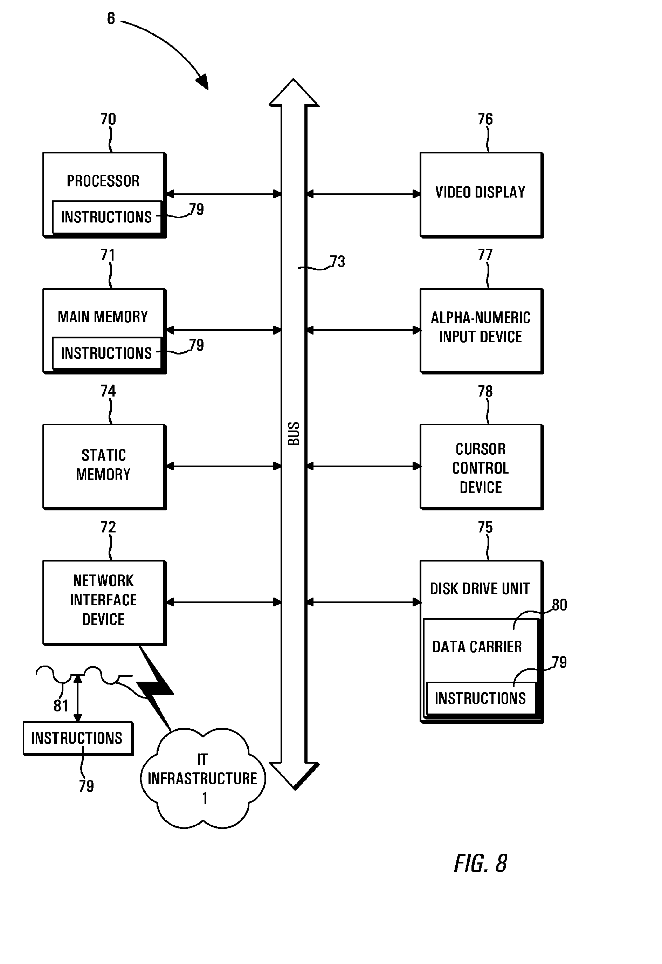

Fig. 8 is a diagrammatic representation of a computer system which provides the functionality of the alarm management system (AMS) 6 of Fig. 1, and is therefore denoted as "alarm management computer system 6". Within the alarm management computer system 6 a set of instructions, for causing the computer system to perform any of the methodologies discussed herein, may be executed. The alarm management computer system 6 includes a processor 70, a main memory 71 and a network interface device 72, which communicate with each other via a bus 73. Optionally, it may further include a static memory 74 and a disk drive unit 75. A video display 76, an alpha-numeric input device 77 and a cursor control device 78 may form an alarm management user interface. The network interface device 72 connects the alarm management computer system 6 to the managed IT infrastructure 1. A set of instructions (i.e. software) 79 embodying any one, or all, of the methodologies described above, resides completely, or at least partially, in or on a machine-readable medium, e.g. the main memory 71 and/or the processor 70. A machine-readable medium on which the software 79 resides may also be a data carrier 80 (e.g. a non-removable magnetic hard disk or an optical or magnetic removable disk) which is part of disk drive unit 75. The software 79 may further be transmitted or received as a propagated signal 81 via the Internet and the IT infrastructure 1 through the network interface device 72.

Thus, the described embodiments of alarm management tools enable consolidating alarm notifications by switching between two consolidation strategies controlled by a parameter-dependent delay period.

All publications and existing systems mentioned in this specification are herein incorporated by reference.

Although certain methods and products constructed in accordance with the teachings of the invention have been described herein, the scope of coverage of this patent is not limited thereto. On the contrary, this patent covers all embodiments of the teachings of the invention fairly falling within the scope of the appended claims either literally or under the doctrine of equivalents.

## Claims

1. A method of consolidating alarm notifications in a fault management system of an IT infrastructure, wherein creation of alarm objects is indicated by initial notifications, and correlations or reductions performed on the alarm objects by a reduction-correlation mechanism are indicated by follow-on notifications, the method comprising:
individually for the alarm objects:
obtaining a parameter-dependent delay period,
in response to follow-on notifications appearing during the delay period, consolidating the initial and follow-on notifications, and after expiration of the delay period, sending a consolidated notification to a user, and
in response to no follow-on notifications appearing during the delay period, sending the initial notification to the user, after expiration of the delay period.

2. The method of claim 1, further comprising:
in response to no follow-on notifications appearing during the delay period,
sending follow-on notifications, finished after the delay period, in response to their appearance.

3. The method of claim 1 or 2, wherein the parameter-dependent delay period of an alarm object depends on at least one of the following parameters: a severity of the alarm object, a load of the fault management system, and a configuration parameter.

4. The method of claim 3, wherein the delay period is decreased for high severity alarm objects and is increased for low severity alarm objects.

5. The method of claim 3 or 4, wherein the delay period is increased in case of a high load on the fault management system.

6. The method of any one of claims 3 to 5, wherein the configuration parameter depends on operational contexts and a reduction-correlation mechanism.

7. The method of claim 6, wherein the configuration parameter defines for each alarm severity the maximum value for the delay for a normal event flow and for an event burst.

8. The method of claim 7, wherein the delay period is calculated by selecting a value between the two configuration values for the delay for a normal event flow and for an event burst in dependence of the load on the fault management system represented by the size of an input alarm object queue.

9. The method of any one of claims 1 to 8, wherein the reduction-correlation mechanism is a threshold filter, a heap filter, a toggling filter, a cascaded combination of said filters, an expert system or a pattern recognition system.

10. A computer system for consolidating alarm notifications in a fault management system of an IT infrastructure, wherein creation of alarm objects is indicated by initial notifications, and correlations or reductions performed on alarm objects by a reduction-correlation mechanism are indicated by follow-on notifications, the method comprising:
individually for the alarm objects:
obtaining a parameter-dependent delay period,
in response to follow-on notifications appearing during the delay period, consolidating the initial and follow-on notifications, and after expiration of the delay period, sending a consolidated notification to a user, and
in response to no follow-on notifications appearing during the delay period, sending the initial notification to the user, after expiration of the delay period.

11. A computer program product which is either in the form of a machine-readable medium with program code stored on it, or in the form of a propagated signal comprising a representation of program code,
wherein the program code is arranged to carry out a method, when executed on a computer system, of consolidating alarm notifications in a fault management system of an IT infrastructure, wherein creation of alarm objects is indicated by initial notifications, and correlations or reductions performed on alarm objects by a reduction-correlation mechanism are indicated by follow-on notifications, the method comprising:
individually for the alarm objects:
obtaining a parameter-dependent delay period,
in response to follow-on notifications appearing during the delay period, consolidating the initial and follow-on notifications, and after expiration of the delay period, sending a consolidated notification to a user, and
in response to no follow-on notifications appearing during the delay period, sending the initial notification to the user, after expiration of the delay period.
